# EUROPÄISCHE PATENTANMELDUNG

(11) **EP 0 929 054 A2**
(43) Veröffentlichungstag der Anmeldung: **14.07.1999**
(21) Anmeldenummer: 99100293.2
(22) Anmeldetag: 09.01.1999
(51) Int. Cl.: G07F 7/08, G07F 9/02, G07F 9/08

(54) **Vorrichtung zur Speicherung von Geldbeträgen**

(30) Priorität: 13.01.1998 DE 19800830
(71) Anmelder: Orga Kartensysteme GmbH, 33104 Paderborn (DE)
(72) Erfinder: Hammer, Asmus, 24159 Kiel (DE)

(57) **Zusammenfassung**

Die Erfindung bezieht sich auf eine Vorrichtung zur Speicherung von Geldbeträgen mit einer Leseeinheit zum Lesen eines auf einer Chipkarte gespeicherten Geldbetrages, mit Mitteln zum Abspeichern eines auf der Chipkarte abgespeicherten vorgegebenen Geldbetrags in ein Speichermedium, wobei der vorgegebene Geldbetrag zu einem bereits gespeicherten Geldbetrag hinzuaddierbar ist zur Bildung eines aktuellen Geldbetrags, mit einer Energieversorgungseinheit zur Bereitstellung einer Versorgungsspannung und mit einer Steuereinheit zur Steuerung des Datentransfers zwischen der Chipkarte und dem Speichermedium, wobei das in der Chipkarte gespeicherte Guthaben um den in dem Speichermedium hinzuaddierten vorgegebenen Geldbetrag verringert wird, wobei die Steuereinheit (3) einen Geldspeicher (4) aufweist zur Speicherung der akkumulierten Geldbeträge und daß zusätzlich Mittel (8) zur optischen und/oder akustischen Wiedergabe des hinzuaddierten und/oder aktuellen Geldbetrags vorgesehen sind.

## Beschreibung

Die Erfindung betrifft eine Vorrichtung zur Speicherung von Geldbeträgen nach dem Oberbegriff des Patentanspruchs 1.

Aus der EP 0 421 808 B1 ist eine Vorrichtung zur Speicherung von Geldbeträgen bekannt, wobei in einem Kartenlesegerät vorgegebene Geldbeträge aus einer ersten Chipkarte herausgelesen und direkt an eine zweite Chipkarte bzw. an ein entsprechendes Geldinstitut übertragen werden zur Speicherung auf der Chipkarte bzw. in einem Terminal des Geldinstituts. Der auf der ersten Chipkarte gespeicherte Geldbetrag wird um den übertragenen Geldbetrag verringert, während der in der zweiten Chipkarte gespeicherte Geldbetrag um den übertragenen Geldbetrag erhöht wird. Die bekannte Vorrichtung ermöglicht somit einen Datentransfer von Geldbeträgen (Buchungen) zwischen Chipkarten einerseits oder einer Chipkarte und einem Terminal andererseits eines Geldinstituts.

Aufgabe der Erfindung ist es, eine Vorrichtung zur Speicherung von Geldbeträgen derart auszubilden, daß ein vorgegebener Geldbetrag von einer Chipkarte in einem einen Geldspeicher aufweisenden Körper abspeicherbar ist, daß eine übersichtliche und anschauliche Darstellung des gespeicherten Geldbetrags ermöglicht wird und daß der gespeicherte Geldbetrag vor Zugriff von unbefugten Personen gesichert ist.

Zur Lösung dieser Aufgabe weist die Erfindung die Merkmale des Patentanspruchs 1 auf.

Der Vorteil der Erfindung ergibt sich insbesondere durch die einfache Darstellung des von einer Chipkarte übertragenen bzw. gespeicherten Geldbetrags. Durch die optische bzw. akustische Wiedergabe wird es insbesondere Kleinkindern ermöglicht, eine Vorstellung von der Höhe des übertragenen Geldbetrags zu erhalten. Die erfindungsgemäße Vorrichtung eignet sich somit vorzugsweise als elektronische Spardose. Der Geldbetrag ist in einem besonders gesicherten Geldspeicher abgelegt, der einen Zugriff von unbefugten Personen auf den Geldbetrag ausschließt. Vorzugsweise ist der Zugriff durch die Eingabe einer PIN gesichert.

Grundgedanke der Erfindung ist es, eine Vorrichtung zur Speicherung von Geldbeträgen zu schaffen, die einerseits eine sichere Abspeicherung des Geldbetrags und andererseits eine einfache und übersichtliche Anzeige des aktuell abgespeicherten Geldbetrags ermöglicht.

Nach einer Weiterbildung der Erfindung wird der entsprechende Geldbetrag durch eine von der Höhe des Geldbetrags abhängigen Anzahl von Leuchtfeldern angezeigt. Diese Leuchtfelder können histogrammartig oder als Stapel ausgebildet sein. Wesentlich ist dabei, daß sie eine solche Größe aufweisen, daß sie leicht wahrnehmbar sind. Vorzugsweise weisen die Leuchtfelder unterschiedliche Farben auf, so daß beispielsweise ein 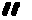 leerer" oder ein 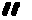 voller" Geldspeicher besonders hervorgehoben visualisiert wird.

Nach einer Weiterbildung der Erfindung werden akustische Mittel zur Wiedergabe des Vorhandenseins einer Transaktion bzw. der Höhe der Transaktion eingesetzt. Beispielsweise kann die Transaktion durch akustische Simulation des Einwerfens einer Geldmünze verdeutlicht werden (Klimpern).

In Ausgestaltung der Erfindung werden akustischen und optischen Mittel gleichzeitig und in sich gegenseitig unterstützender Weise eingesetzt, so daß ein Höchstmaß an Wahrnehmung der Transaktion gewährleistet ist.

Ausführungsbeispiele der Erfindung werden nachfolgend anhand der Zeichnungen naher erläutert.

Es zeigen:
- Figur 1: ein Blockschaltbild einer erfindungsgemäßen Vorrichtung,
- Figur 2: eine erfindungsgemäße Vorrichtung nach einem ersten Ausführungsbeispiel,
- Figur 3: eine erfindungsgemäße Vorrichtung nach einem zweiten Ausführungsbeispiel,
- Figur 4: eine erfindungsgemäße Vorrichtung nach einem dritten Ausführungsbeispiel und
- Figur 5: einen Schnitt entlang der Linie V-V gemaß Figur 4.

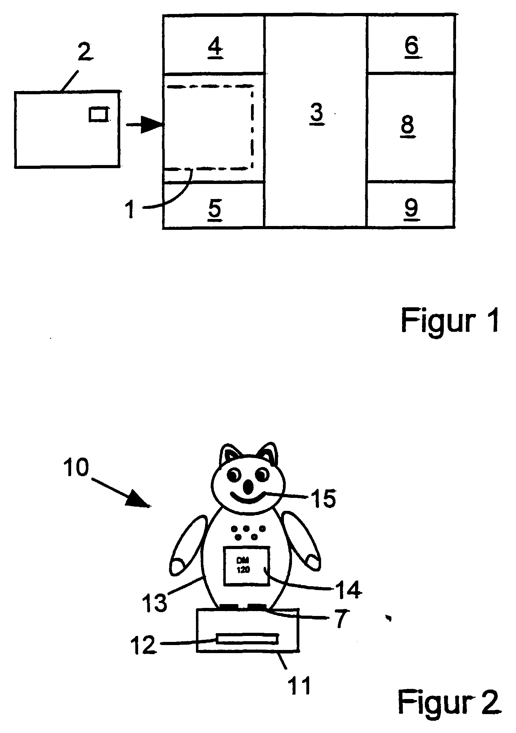

In Figur 1 sind die wesentlichen Baugruppen eines Teils der erfindungsgemäßen Vorrichtung dargestellt, die jedem nachfolgend beschriebenen Ausführungsbeispiel der Erfindung zugrundeliegen. Die Vorrichtung umfaßt eine Leseeinheit 1 zum Lesen einer in einen Kartenschlitz eingesetzten Chipkarte 2. Eine Steuereinheit 3 dient zur Steuerung der Funktionen und des Ablaufs der Vorrichtung bzw. der in dieser enthaltenen Baugruppen. Die Steuereinheit 3 weist einen nicht dargestellten Mikroprozessor auf sowie einen ROM-Speicher und einen RAM-Speicher. Die Steuereinheit 3 hat Zugriff auf einen gesonderten Abschnitt des RAM-Speichers, der als Geldspeicher 4 dient und in dem die Transaktionsdaten unter Einschluß des von der Chipkarte 2 übertragenen Geldbetrags abgespeichert sind. Die Übertragung (Transaktion) des Geldbetrags von der Chipkarte in den Geldspeicher 4 erfolgt in bekannter Weise durch Übertragen eines vom Benutzer vorgegebenen Geldbetrags entsprechend einer Geldkartenfunktion. In einem Speicher der Steuereinheit 3 ist zusätzlich ein Akkumulierprogramm vorgesehen, mittels dessen der von der Chipkarte 2 übertragene Geldbetrag zu dem bereits in dem Geldspeicher 4 gespeicherten Geldbetrag zu einem aktuellen Geldbetrag aufaddiert wird, der dann als Ergebnis der Transaktion den neuen gespeicherten Geldbetrag der Vorrichtung repräsentiert. Ferner veranlaßt die Steuereinheit 3 mittels der Leseeinheit 1 die Verringerung des auf der Chipkarte 2 gespeicherten Geldbetrags um den im Geldspeicher 4 hinzuaddierten Betrag.

Zur Stromversorgung der erfindungsgemäßen Vorrichtung, die als tragbare Vorrichtung ausgebildet sein kann, ist eine Stromversorgungseinheit 5 vorgesehen, die beispielsweise als Batterie ausgeführt sein kann. Eine Bedieneinheit 6 weist Bedientasten 7 auf zur Eingabe eines gewünschten zu tranferierenden Geldbetrags von der Chipkarte 2 in den Geldspeicher 4. Eine Anzeigeeinheit 8 dient zur Anzeige der entsprechenden mit der Transaktion in Verbindung stehenden Informationen. Eine Akustikeinheit 9 dient zur akustischen Wiedergabe der Transaktion für den Benutzer.

Nach einem ersten Ausführungsbeispiel der Erfindung gemäß Figur 2 ist die Vorrichtung als eine bärenförmige Speichereinrichtung 10 ausgebildet, die in einem Fußteil 11 die Leseeinheit 1 mit einem Kartenschlitz 12 aufweist. Die Steuereinheit 3 ist ebenfalls innerhalb des Fußteils 11 angeordnet. Auf einer Oberseite des Fußteils 11 sind Bedientasten 7 angeordnet zur Eingabe von den die Transaktion betreffenden Daten. Auf der Vorderseite eines Rumpfes 13 der bärenförmigen Einrichtung 10 ist ein LC-Display 14 angeordnet, das als Anzeigeeinheit -vorzugsweise menügeführt - die entsprechenden Daten darstellt. Zur weiteren optischen Anzeige ist die Mundkontur mit Leuchtelementen 15, vorzugsweise LED's, versehen. Diese werden in einen blinkenden Zustand gebracht, sobald die Transaktion gestartet worden ist, und hören erst mit Beendigung der Transaktion auf zu blinken. Das 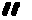 Füllen" des Geldspeichers 4 wird zusätzlich dokumentiert durch die im Rumpf 13 angeordnete Akustikeinheit 9, die ein für einen Bären typisches Brummen erzeugt. Durch Betätigung einer entsprechenden Bedientaste 7 wird jederzeit der aktuell im Geldspeicher 4 abgespeicherte Geldbetrag im LC-Display 14 angezeigt. Zusätzlich können Datum und Höhe der letzten fünf Transaktionen in menügeführter Form angezeigt werden. Der Geldspeicher 4 ist in einem gesicherten Speicherbereich angeordnet, so daß eine Manipulation des Geldspeichers 4 verhindert wird. Der Geldspeicher 4 ist vorzugsweise als nichtflüchtiger Speicher (EEPROM) ausgebildet. Alternativ kann er auch als RAM-Speicher ausgebildet sein.

Ein Herauslesen bzw. Übertragen des in dem Geldspeicher 4 abgespeicherten Geldbetrags auf eine beliebige Chipkarte ist durch Vorsehen einer PIN-Abfrage ausgeschlossen. Nur eine authorisierte Chipkarte, die durch Eingabe einer PIN identifizierbar ist, ist berechtigt, den im Geldspeicher 4 gespeicherten Geldbetrag zu speichern. Dies kann insbesondere durch eine im Besitz eines Geldinstituts befindliche Chipkarte erfolgen, so daß eine Transaktion von dem Geldspeicher 4 auf beispielsweise ein Bankkonto ausschließlich bei dem Geldinstitut erfolgt.

Alternativ kann auch durch bloße Eingabe einer PIN, die mit der zuvor von einer authorisierten Person in der Speichereinrichtung 10 eingegebenen PIN übereinstimmt, eine Transaktion von dem Geldspeicher 4 auf eine beliebige in der Leseeinheit 1 eingeführten Chipkarte erfolgen. Somit können beispielsweise die Eltern des Kindes, in dessen Besitz sich der Bär 10 befindet, den akkumulierten Geldbetrag mittels ihrer Chipkarte oder Geldkarte auf ein gewünschtes Konto transferieren bzw. in einem Geschäft für Kaufartikel ausgeben.

Die vorgenannten Zugriffsschutzmöglichkeiten sind auch für die folgenden Ausführungsbeispiele anwendbar.

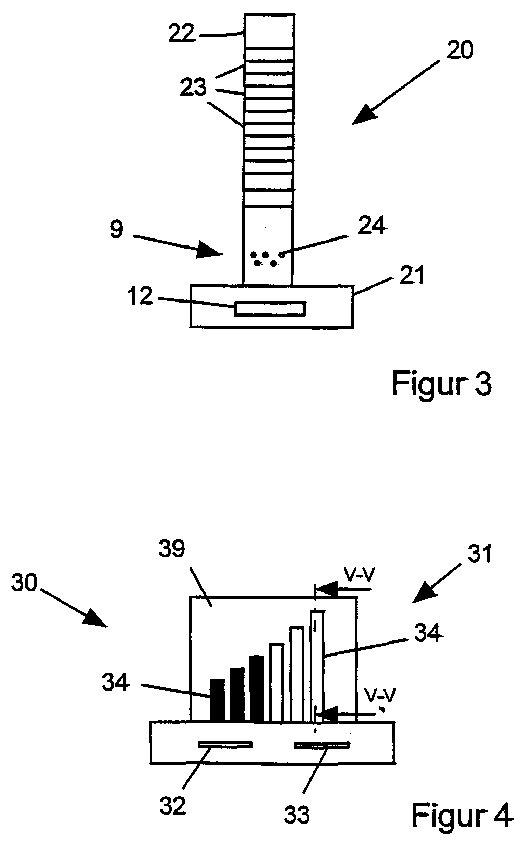

Nach einem zweiten Ausführungsbeispiel gemäß Figur 3 ist die Vorrichtung als Geldspeicherturm 20 ausgebildet. In einem Fußteil 21 des Turms 20 ist ein Kartenschlitz 22 zur Eingabe der Chipkarte 2 vorgesehen. Innerhalb des Fußteils 21 sind die Bauteile 1, 3, 4, 5 entsprechend Figur 1 angeordnet. In dem zylinderförmig ausgebildeten Turmteil 22 sind im äquidistanten Abstand Lichtquellen angeordnet, die jeweils das Licht in Querrichtung des Turmteils 22 zu Leuchtflächen 23 abstrahlen. Die Leuchtflächen 23 können beispielsweise einen Stapel von Münzen symbolisieren und sind dementsprechend farblich gestaltet. Bei Durchführung einer Transaktion würde dann in Abhängigkeit von der Höhe des aufzuaddierenden Geldbetrags eine entsprechende Anzahl von Leuchtflächen 23 zusätzlich beleuchtet werden, so daß die Erhöhung des gespeicherten Geldbetrags optisch dargestellt würde. Diese Erhöhung wird unterstützt durch eine innerhalb des Turmteils 22 angeordnete Akustikeinheit 9 mit einem hinter einer Anzahl von in der Vorderwand angeordneten Löchern 24 angebrachter Lautsprecher, die während der Transaktion ein Klimpergeräusch erzeugt entsprechend dem Klimpern eines Geldstücks beim Einwerfen in einen metallischen Behälter.

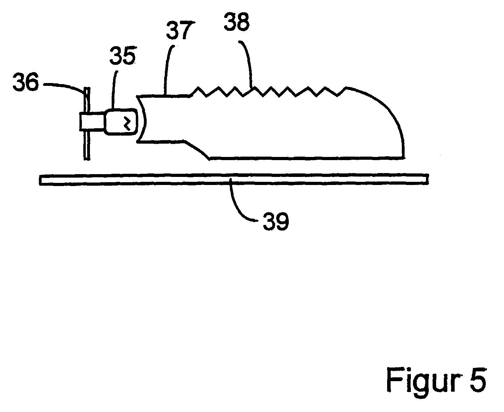

Nach einem dritten Ausführungsbeispiel der Erfindung gemäß Figur 4 und Figur 5 besteht die Vorrichtung aus einem Ständer 30 und einem Anzeigeteil 31. In dem Ständer 30 sind die in Figur 1 dargestellten Baugruppen angeordnet. Neben einem ersten Kartenschlitz 32 zum Laden der Vorrichtung ist zusätzlich ein zweiter Kartenschlitz 33 vorgesehen, in den eine Transaktionskarte eines Geldinstituts einsetzbar ist zum Herunterladen des Geldbetrags aus dem Geldspeicher 4 auf die Transaktionskarte. Alternativ kann auch nur ein einziger Kartenschlitz mit zugehöriger Leseeinheit vorgesehen sein entsprechend vorgenannten Ausführungsbeispielen, wobei die Geldbetragsdaten mittels eines Adapters mit einem kartenähnlichen Ansatz in ein externes Kartenlesegerät übertragen werden. Alternativ können die erfindungsgemäßen Vorrichtungen auch eine entsprechende Schnittstelle zur Verbindung mit einem Personal Computer aufweisen.

Das Anzeigeteil 31 weist histogrammartige Leuchtfelder 34 auf, die sich jeweils balkenförmig und mit zunehmender Höhe in vertikaler Richtung erstrecken. In den Ständer 30 ist eine Reihe von jeweils einem Balken zugeordneten Lichtquellen 35 auf einer Trägerplatte 36 angeordnet. Vorzugsweise sind die Lichtquellen 35 als Leuchtdioden (LED's) ausgebildet. Zur homogenen Beleuchtung der Leuchtfelder 34 schließt sich jeweils an die Lichtquelle 35 ein Lichtleiter 37 mit einer auf der Rückseite desselben prismenförmigen Struktur 38 an, so daß die Lichtstrahlen nach vorne reflektiert werden. Die Länge der Lichtleiter 37 entspricht der Höhe des betreffenden Balkens bzw. der anzuzeigenden Höhe des gespeicherten Geldbetrags. Die Vorderwand 39 des Anzeigeteils 31 besteht aus einem transparenten Kunststoff, der eingefärbt ist. Beispielsweise kann der kleinste Balken rot eingefärbt sein zur Signalisierung einer baldigen Auffüllung des Geldspeichers 4 und der größte Balken kann grün eingefärbt sein zur Signalisierung eines 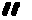 vollen" Geldspeichers mit der Aufforderung, den Geldspeicher durch Übertragung auf ein Konto eines Geldinstituts zu 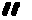 entleeren".

Alternativ können die vorgenannten Ausführungsbeispiele auch als 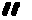 Sammelbüchse" zum Abspeichern von mittels Geldkarte getätigten Spenden eingesetzt werden, wobei der gespeicherte Endbetrag mittels authorisierter Chipkarte herausgelesen werden kann.

## Patentansprüche

1. Vorrichtung zur Speicherung von Geldbeträgen mit einer Leseeinheit zum Lesen eines auf einer Chipkarte gespeicherten Geldbetrages, mit Mitteln zum Abspeichern eines auf der Chipkarte abgespeicherten vorgegebenen Geldbetrags in ein Speichermedium, wobei der vorgegebene Geldbetrag zu einem bereits gespeicherten Geldbetrag hinzuaddierbar ist zur Bildung eines aktuellen Geldbetrags, mit einer Energieversorgungseinheit zur Bereitstellung einer Versorgungsspannung und mit einer Steuereinheit zur Steuerung des Datentransfers zwischen der Chipkarte und dem Speichermedium, wobei das in der Chipkarte gespeicherte Guthaben um den in dem Speichermedium hinzuaddierten vorgegebenen Geldbetrag verringert wird, dadurch gekennzeichnet, daß die Steuereinheit (3) einen Geldspeicher (4) aufweist zur gesicherten Speicherung der akkumulierten Geldbeträge und daß zusätzlich Mittel (8) zur optischen und/oder akustischen Wiedergabe des hinzuaddierten und/oder aktuellen Geldbetrags vorgesehen sind.

2. Vorrichtung nach Anspruch 1, dadurch gekennzeichnet, daß eine Bedieneinheit zum Eingeben des zu übertragenden Geldbetrags und daß eine Anzeigeeinheit zur Anzeige des aktuellen Geldbetrags vorgesehen ist.

3. Vorrichtung nach Anspruch 1 oder 2, dadurch gekennzeichnet, daß der aktuelle Geldbetrag durch eine Abfrage einer Identifizierungsfolge (PIN) vor unbefugten Zugriff geschützt ist.

4. Vorrichtung nach einem der Ansprüche 1 bis 3, dadurch gekennzeichnet, daß eine optische Anzeigeeinheit (15, 23, 34) vorgesehen ist zur Visualisierung des Abspeicherns des Geldbetrags von der Chipkarte (2) in den Geldspeicher (4).

5. Vorrichtung nach einem der Ansprüche 1 bis 4, dadurch gekennzeichnet, daß die Anzeigeeinheit (8) ein LC-Display (14) umfaßt zur digitalen Anzeige des gebuchten und/oder aktuellen Geldbetrags in dem Geldspeicher (4).

6. Vorrichtung nach einem der Ansprüche 1 bis 5, dadurch gekennzeichnet, daß die Anzeigeeinheit (8) eine Folge von Leuchtflächen (23) aufweist, deren Anzahl in Abhängigkeit von der Höhe des Geldbetrags aufleuchten.

7. Vorrichtung nach einem der Ansprüche 1 bis 6, dadurch gekennzeichnet, daß die Anzeigeeinheit (8) lichtdurchlässige Leuchtfelder (34) aufweist, die jeweils einen vorgegebenen Geldbetrag repräsentieren, und entprechend des abzuspeichernden und/oder abgespeicherten Geldbetrags durch mindestens eine Lichtquelle (35) beleuchtbar sind.

8. Vorrichtung nach einem der Ansprüche 1 bis 7, dadurch gekennzeichnet, daß die Anzeigeeinheit (8) als eine Reihe von histogrammartig angeordneten Leuchtfeldern (34) ausgebildet ist.

9. Vorrichtung nach einem der Ansprüche 1 bis 8, dadurch gekennzeichnet, daß ein Lichtleiter (37) zwischen der entsprechenden Lichtquelle (35) und dem Leuchtfeld (34) angeordnet ist.

10. Vorrichtung nach einem der Ansprüche 1 bis 9, dadurch gekennzeichnet, daß eine Akustikeinheit (9) vorgesehen ist zur akustischen Wiedergabe des Abspeicherns des Geldbetrags von der Chipkarte (2) in den Geldspeicher (4).

11. Vorrichtung nach Anspruch 10, dadurch gekennzeichnet, daß die Akustikeinheit (9) einen Lautsprecher aufweist, derart, daß das Abspeichern eines Geldbetrags durch das klangliche Simulieren des Einwerfens von Münzen in einen metallischen Behälter signalisiert wird.
